# EUROPEAN PATENT APPLICATION

(11) **EP 1 411 727 A1**
(43) Date of publication of application: **21.04.2004**
(21) Application number: 03023336.5
(22) Date of filing: 15.10.2003
(51) Int. Cl.: H04N 7/16, G07F 7/10

(54) **Smart card for controlled access services**

(30) Priority: 16.10.2002 IT fi20020193
(71) Applicant: TECHNOCELL AG, 6834 Morbio Inferiore (CH)
(72) Inventor: Tagliabue, Egidio, 22012 Cernobbio (IT)
(74) Representative: Gervasi, Gemma, Dr.

(57) **Abstract**

The present invention refers to smart cards credited with time for the fruition of controlled access services such as subscription TV and pay per view.

## Description

### Field of the invention

The present invention refers to time credited smart cards for the fruition of controlled access services.

### State of the art

The numerous controlled access services currently available, among which pay-TV services have great importance due to their ever-growing diffusion, are all substantially based on the provision of the service in question on the basis of the prior agreement of a contract between the service provider and the user.

Through the agreement of the subscription contract the services provider obtains detailed information regarding the user such as their personal details (name, sumame, address, national insurance number etc.), and data relating to the equipment in the users possession for the reception of the service in question, for example, in the case of pay-TV, the type of decoder and smart card. With this data in their possession the service provider singularly identifies all their clients and maintains precise control over the distribution of the service to each of them.

Within the pay-TV field (but the general subject can be extended to other controlled access services such as internet navigation, web-TV, cable TV, software application provision over the internet etc.) the services of pay-per-view, video on demand, and near video on demand also operate within the ambit of a user-provider relationship already established and controlled by a subscription contract. In practice the user requests the activation of the vision of a channel or of an event not included in his subscription contract.

This situation presents inconveniences in such that, subjugating the fruition of pay-per-view services to the stipulation of a general subscription contract, limits, in fact, the potentialities of sales. Impulse purchases are in fact limited, requiring the user to pass through the completion of subscription forms and the later activation of the service which is not immediate but frequently requires a confirmation of the data of the user's receiving equipment by means of a telephone call to the service provider.

Furthermore the pay-per-view channels are bundled inside packages of channels, available through subscription, which do not necessarily interest the user who frequently does not believe in the need to pay the additional cost associated with the extra channels present in the subscription bundle, for the fruition of the pay-per- view service.

### Summary of the invention

The applicants have surprisingly found a timed smart card which allows one to overcome the above mentioned disadvantages, in relation to the smart cards currently on the market. Therefore the subject of the present invention is a smart card for decoding controlled access programmes, characterised by the fact of comprising data relating to the expiry date and/or to the maximum time of effective use of the smart card itself. A further subject of the present invention is constituted by a decoder comprising at least one smart card according to the invention and the use of said smart card for controlled access services.

### Description of the figures

Fig. 1 - Flow diagram of the working principle of the smart card according to the present invention.
Fig. 2 - Example of the production sequence of the smart card according to the present invention.

### Detailed description of the invention

The present invention relates to a pre-paid and pre-activated smart card for the fruition of controlled access services such as, for example, pay - TV.

Remaining, by way of example, in the field of the transmission of pay television channels, this pre-paid and pre-activated smart card will allow the vision, for a determined period of time, of one or more channels making possible fruition of an anonymous and immediate pay-per-view service on the part of the user who does not need to undersign any subscription contract but will have to pay exclusively for the period of time of effective use for the channels or programs maintaining, in addition, complete anonymity. A smart card according to the present invention allows for impulse buying on the part of the user because it renders the service purchased immediately usable and not dependent on the sending of ones own personal data to the service provider for the stipulation of the subscription contract.

The subject smart card, given its characteristics, will be distributed much more freely than currently, since it may be sold as an independent item and released from the undersigning of subscription contract procedures. It may therefore find a place in the large department stores, in the supermarkets, in vending machines etc. quickly reaching much greater levels of diffusion than currently.

All the current pay TV systems are substantially based on encoding, on the part of the provider or service supplier, of the audio/video signal and on its transmission, in addition to the data allowing the decoding thereof, to the user supplied with an appropriate receiver. Said receiver is capable of processing the audio/video signal transmitted and of decoding it, rendering it then visible, whenever enabled by a smart card containing the decryption codes. Smart cards of this type are distributed to the users who undersign the subscription contracts, and are the instruments through which the same user can access the service for which he has paid, pay-TV, video on demand, near video on demand etc.

The smart card according to the present invention is compatible with the decoders currently in use and present on the market, and, with respect to the current smart cards, the part relating to the decoding ability of the encrypted signal remains unchanged and is therefore independent of the type of encoding selected by the service provider for the subject controlled access. Said smart card is therefore applicable to all the encoding/decoding systems currently in use and does not require operative modifications to said systems, neither in the aspects related to security nor to these of anti-tampering already implemented in the current smart cards.

The smart card according to the present invention, subordinates the enabling of the decryption of the signal, by the decoder into which it is inserted, to the control of the use time of the smart card itself. It contains an indication of the time of validity, resulting from the combination of the maximum time of effective use with the limiting date of use beyond which the smart card is deactivated.

The smart card according to the present invention allows the fruition of paid services according to the following ways:
- Smart cards with an effective time of use, in which a certain number of hours of vision are credited. Each time the user inserts the smart card into the decoder to activate the vision of the encrypted channels, the effective time of use is counted and compared to the maximum time of effective use to establish whether to allow the way open for decoding. The counting of the time is interrupted when the smart card is removed from the decoder or, optionally, when the decoder is tuned to a channel not belonging to the bundle covered by the smart card itself.
- Smart cards with a maximum possible time of use, in which, in practice, decoding is guaranteed up to a limit date of use i.e. an expiry date which can be pre-memorised or calculated on the basis of the first date of insertion of the smart card itself into the decoder. The expiry date can optionally be updated remotely by the services provider. According to a particular embodiment of a smart card of this type, a maximum time of effective use can be envisaged to be consumed within a certain expiry date.

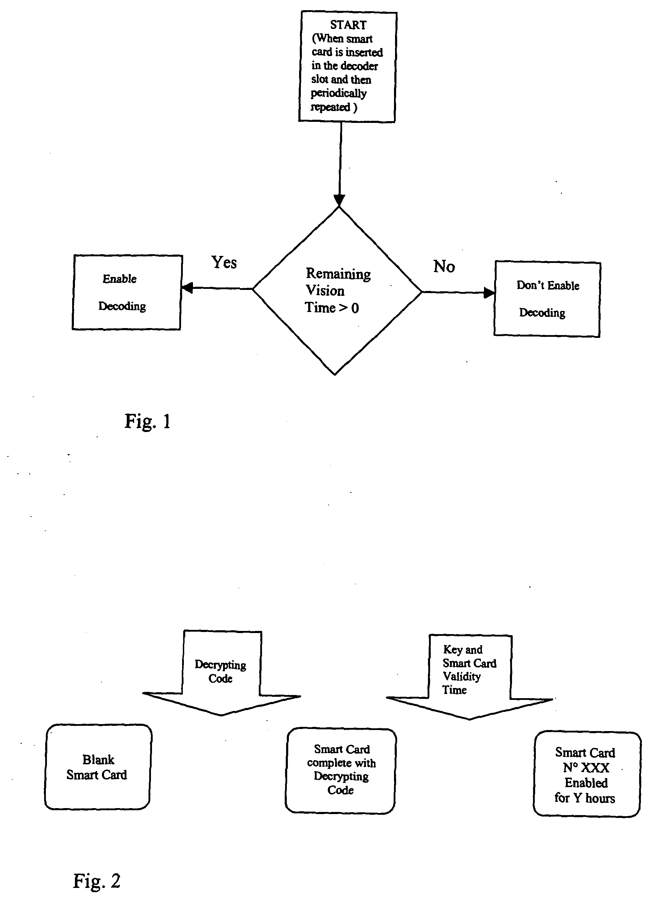

The times previously described will be counted cyclically and checked by the smart card onboard software. The general principle of function is summarised in the flow-diagram in Fig. 1 in which it can be seen how the control of residual vision time is cyclically controlled prior to decoding and, on the basis of the result of this check, it is seen how decoding itself either is, or not, activated.

An example of embodiment of what is described above can be realised implementing a control on the smart card supply voltage. In case the supply voltage is on, the decryption and the time counting will be enabled. On the opposite, if the smart card supply voltage is off, the decryption and the time counting will be stopped.

In alternative controls may be implemented based on the count of signals containing time related information, if they are made available by the coding system employed by the conditioned access service provider.

The decoding can be relevant to any system currently in use or optionally developable in the future in as much as the decoding section of the smart card according to the present invention is the same as for models currently present on the market.

In Fig. 2 we see laid out an outline of a possible programming procedure of the smart card according to the present invention in which it is pointed out that the memorisation of the time of validity is performed in the same step, called the keysafe, in which the decoding keys are memorised. This stage represents the last step of the manufacturing of the smart card and can be performed by the card distributor or by the supplier of the encryption technology who, in these cases supplies cards ready for use.

The smart card as previously described can be used for the fruition of controlled access services such as, for example, cable, satellite and terrestrial digital pay-TV, pay-per-view, video on demand, internet access, web TV and in particular pay TV.

The above mentioned controlled access services can also be additional services that differs from the normal audio video content of the TV channel, for example services provided by TV channels that normally broadcast unencrypted programs and, in addition, offer a choice of pay games, pay connectivity, pay betting, pay software etc. or services provided by dedicated TV channels.

## Claims

1. A smart card for the decoding of controlled access programmes, **characterised by** the fact of comprising a data relating to the limit date of use of the same card itself.

2. A smart card for the decoding of controlled access programmes, **characterised by** the fact of comprising a data relating to a maximum time of effective use of the smart card itself.

3. The smart card according to claim 1 comprising furthermore a data relating to a maximum time of effective use of the smart card itself.

4. The smart card according to claim 1 further comprising a software to count the current date and to compare it with the limit date of use of the smart card itself.

5. The smart card according to claim 2 further comprising a software for counting the time of effective use and to compare said time with the data relating to the maximum effective use of the smart card.

6. The smart card according to claim 3 further comprising a software for counting the time of effective use and to compare said time with the data relating to the maximum time of effective use of the smart card and a software for counting the current date and comparing with the limit date of the smart card itself.

7. The smart card according to any of the claims from 4 - 6 in which said software activates or deactivates the successive decoding of the controlled access service as a function of the time of use still available.

8. The smart card according to claims 1 - 7 further comprising an identification code for the card itself.

9. The smart card according to claims 1 - 8 wherein the dates relating to the time limits of use are rechargeable.

10. A decoder for controlled access services **characterised by** the fact of comprising at least one smart card according to claims 1 - 9.

11. Use of the smart card according to claims 1 - 9 for controlled access services.

12. The use according to claim 11 wherein said controlled access services are selected from the group consisting of satellite and terrestrial digital pay TV, cable pay TV, pay-per-view, video on demand, internet access and web TV.

13. The use according to claim 12 wherein said controlled access services are represented by pay-TV services.
